# EUROPÄISCHE PATENTSCHRIFT

(11) **EP 2 218 534 B1**
(45) Veröffentlichungstag und Bekanntmachung des Hinweises auf die Patenterteilung: **05.04.2017**
(21) Anmeldenummer: 10001418.2
(22) Anmeldetag: 11.02.2010
(51) Int. Cl.: B23D 63/20

(54) **Vorrichtung zum Bearbeiten von Sägezähnen eines Sägeblattes**
Device for treating saw teeth of a saw blade
Dispositif de traitement de dents de scie d'une lame de scie

(30) Priorität: 16.02.2009 DE 102009009178
(43) Veröffentlichungstag der Anmeldung: 18.08.2010
(73) Patentinhaber: VOLLMER WERKE Maschinenfabrik GmbH, 88400 Biberach/Riss (DE)
(72) Erfinder: Bailer, Norbert, 88433 Schlemmerhofen-Altheim (DE); Rehm, Miran, 88477 Schwendi (DE); Mall, Fridolin, 89584 Ehingen (DE)
(74) Vertreter: Thum, Bernhard

(56) Entgegenhaltungen:
- DE-A1- 4 114 942
- JP-A- 7 010 433
- JP-A- 62 007 325
- US-A- 5 040 436

## Beschreibung

Die vorliegende Erfindung betrifft eine Vorrichtung zum Bearbeiten von Sägezähnen eines Sägeblattes gemäß dem Oberbegriff des Anspruchs 1.

Derartige Vorrichtungen werden beispielsweise dazu verwendet einen Sägezahn des Sägeblattes mit Stellit - einem Hartstoff - zu bestücken. Hierzu wird das Stellit als Zusatzstoff in Form von Stäben oder Drähten mit verschiedenen Durchmessern zugeführt und an einer Abschmelzstelle durch einen Schweißbrenner, insbesondere einen Plasmaschweißbrenner, abgeschmolzen. Das verflüssigte Stellit dringt dabei schwerkraftbedingt in eine Formbackenanordnung ein, die im geschlossenem Zustand den zu stellitierenden Sägezahn umgibt und an diesem Sägezahn einen aufzufüllenden Hohlraum bildet. Nach dem Erstarren des Stellits wird die Formbackenanordnung geöffnet, wobei der mit einer Stellitschneide versehene Sägezahn ausgeformt wird, und anschließend der nächste Sägezahn entsprechend bearbeitet werden kann. Durch das Stellitieren wirken hohe Temperaturen auf das Material des Sägeblatts ein. Die hohen Temperaturen bzw. das Abkühlen des Sägezahns nach dem Stellitieren können Verspannungen und Änderungen des Materialgefüges in das Material des Sägeblatts einbringen, die einen Verzug in dem Sägeblatt und/oder einen Bruch des Sägezahns auf dem Sägeblatt hervorrufen können. Dementsprechend ist es notwendig, nach dem Stellitieren dem Sägezahn bzw. dem Sägeblatt erneut Wärme zuzuführen, um eine Gefügeveränderung in Form einer Rekristallisation in dem Material des Sägeblatts hervorzurufen, wodurch die Verspannungen in dem Material abgebaut werden.

Bisher werden das Stellitieren und das Anlassen an zwei verschiedenen Arbeitsstellen durchgeführt, wodurch es notwendig ist, das Sägeblatt von der ersten Arbeitsstelle - der Stellitierstelle - zu der zweiten Arbeitsstelle - der Anlassstelle - zu transportieren. Mit anderen Worten muss das Sägeblatt aus der Stellitiervorrichtung ausgespannt werden und in eine Anlassvorrichtung eingespannt und neu ausgerichtet werden. Zum Einen bedeutet das Umspannen erheblichen Zeit- und Arbeitsaufwand, und zum Anderen kann es beim Umspannen bzw. neu ausrichten des Sägeblattes zu Ungenauigkeiten kommen, die dazu führen, dass unbrauchbare Sägeblätter als Ausschuss produziert werden.

Demgegenüber ist es eine Aufgabe der Erfindung eine Vorrichtung der eingangs bezeichneten Art bereitzustellen, die verschiedene Bearbeitungsvorgänge an einem Sägeblatt in einer Vorrichtung bzw. Aufspannung möglich macht.

Diese Aufgabe wird gelöst durch eine Vorrichtung gemäß dem Anspruch 1. Vorteilhafte Weiterbildungen der Erfindung sind den abhängigen Ansprüchen zu entnehmen.

Mit der erfindungsgemäßen Vorrichtung ist es möglich, zwei Bearbeitungsvorgänge, nämlich das Stellitieren und Anlassen, in einer Vorrichtung durchzuführen, ohne das Sägeblatt umspannen und neu ausrichten zu müssen. Das Sägeblatt verbleibt in derselben Aufspanneinrichtung während des Stellitierens und Anlassens, wobei die Vorschubeinrichtung jeweils den zu bearbeitenden Sägezahn in die vorbestimmte Bearbeitungsposition verlagert. Mit anderen Worten können, falls gewünscht, sämtliche Sägezähne in einem Arbeitsgang stellitiert und anschließend in einem nächsten Arbeitsgang angelassen werden, wobei das Sägeblatt in derselben Aufspanneinrichtung in der Bearbeitungsvorrichtung verbleibt und nicht umgespannt werden muss. Dies wird zum Einen durch die Vorschubvorrichtung erreicht, die einen vorbestimmten Sägezahn in eine vorbestimmte Bearbeitungsposition verlagert, und zum Anderen durch die Verlagerung der Anlasseinrichtung, die aus einer Ruheposition in eine Anlassposition und zurück verlagert werden kann.

Um die Anlasseinrichtung aus einer Ruheposition in eine Anlassposition und zurück verlagern zu können, sieht eine bevorzugte Ausführungsform der Erfindung vor, dass die Anlassvorrichtung manuell oder durch einen steuerbaren Antrieb aus der Ruheposition in die Anlassposition verlagerbar ist.

Ferner ist hier bevorzugt, dass die Anlasseinrichtung an einer Hebelanordnung angeordnet ist und mittels der Hebelanordnung aus der Ruheposition in die Anlassposition verlagerbar ist. Dem ist hinzuzufügen, dass die Hebelanordnung derart an einer Halterung angeordnet ist, dass die Anlasseinrichtung eine zumindest annähernd geradlinige Bewegung aus der Ruheposition in die Anlassposition und zurück ausführt. Mit anderen Worten wird durch die Hebelanordnung bzw. die annährend geradlinige Bewegung eine möglichst direkte und schnelle Verlagerung der Anlasseinrichtung erreicht, wobei die geradlinige Bewegung für ihre Ausführung zudem wenig Raum benötigt.

Alternativ zu der voranstehend beschriebenen geradlinigen Bewegung kann die Hebelanordnung derart angeordnet sein, dass die Anlasseinrichtung eine Bewegung entlang einer gekrümmten Kurve, insbesondere entlang einer kreisförmig gekrümmten Kurve aus der Ruheposition in die Anlassposition und zurück ausführt.

Gemäß einer weiteren Ausführungsform der Erfindung ist die Anlasseinrichtung mittels einer Schlittenanordnung aus der Ruheposition in die Anlassposition und zurück verlagerbar. Vorzugsweise können jedoch auch in einem ersten Arbeitsgang sämtliche Sägezähne stellitiert werden und in einem zweiten Arbeitsgang angelassen werden.

Soll der gleiche Sägezahn, der sich in der Bearbeitungsposition befindet stellitiert und angelassen werden, ist erfindungsgemäß die Vorschubeinrichtung derart steuerbar, dass der gleiche Sägezahn zum aufeinanderfolgenden Stellitieren und Anlassen in der Bearbeitungsposition verbleibt.

Kann ein Sägezahn aufgrund der Materialbeschaffenheit des Sägeblattes oder der Form des Sägezahns bzw. Sägeblattes nicht direkt nach dem Stellitieren, d.h. erst nach einer bestimmten Abkühlphase angelassen werden, so kann gemäß der Erfindung die Vorschubeinrichtung derart gesteuert werden, dass zum Stellitieren und Anlassen jeweils ein anderer Sägezahn in die Bearbeitungsposition verlagerbar ist. Gemäß einer bevorzugten Ausführungsform ist die Vorschubeinrichtung mittels einer CNC-Steuerung steuerbar. Die CNC-Steuerung ermöglicht die Positionierung eines vorbestimmten Sägezahns in der Bearbeitungsposition. Mit anderen Worten kann eine Gruppe mit einer vorbestimmten Anzahl von Zähnen stellitiert und eine dieser Gruppe nachfolgende zweite Gruppe mit einer vorbestimmten Anzahl von Zähnen nicht stellitiert werden. Die beiden vorbestimmten Zahngruppen werden solange wechselweise stellitiert bzw. nicht stellitiert, bis sämtliche Sägezähne auf dem Sägeblatt stellitiert sind. Anschließend kann in einem oder mehreren weiteren Bearbeitungsdurchläufen eine Gruppe mit einer vorbestimmten Anzahl von Zähnen angelassen und eine nachfolgende Gruppe mit einer vorbestimmten Anzahl von Zähnen übersprungen und somit nicht angelassen werden. Diese Gruppierungen von Sägezähnen wiederholen sich solange, bis alle Sägezähne auf dem Sägeblatt angelassen sind. Hierbei kann das Sägeblatt während des Stellitierens und des Anlassens in der gleichen Aufspannung verbleiben.

Um einen Sägezahn in einer Vorrichtung stellitieren und anlassen zu können, sieht die Erfindung vor, dass der Schweißbrenner aus einer Ruheposition in eine Schweißposition und zurück verlagerbar ist. In diesem Zusammenhang ist zu erwähnen, dass der Schweißbrenner über einen Positionierhebel oder einen Positionierantrieb aus der Ruheposition in eine Schweißposition und zurück verlagert werden kann.

Die Anlasseinrichtung ist vorteilhaft als eine Hochfrequenz-Anlasseinrichtung ausgebildet, die eine auswechselbare Induktionsschlaufe aufweist. Mit anderen Worten wird eine Induktionsschlaufe ausgewählt, deren Form und Größe zu der Form und Größe des anzulassenden Sägezahns passt.

Eine bevorzugte Ausführungsform der Erfindung sieht vor, dass die Induktionsschlaufe relativ zu dem zu bearbeitenden Sägezahn verlagerbar ist. Zur Anpassung der Position der Induktionsschlaufe bzw. der Anlasseinrichtung an verschiedenen Größen und Arten von Sägeblättern ist die Induktionsschlaufe in vertikaler und horizontaler Richtung relativ zu dem Sägezahn verlagerbar. Da sich der zu bearbeitende Sägezahn zentral zwischen den Schlaufenabschnitten der Induktionsschlaufe befinden sollte, sieht eine Weiterbildung der Erfindung vor, dass die Induktionsschlaufe quer zu dem Sägeblatt verlagerbar ist. Mit anderen Worten kann die Induktionsschlaufe bzw. die Anlasseinrichtung in drei Richtungen relativ zu dem Sägeblatt verlagert werden.

Die Induktionsschlaufe wird bevorzugt über zumindest eine Stellschraube oder zumindest eine Exzenteranordnung verlagert.

Um Gattersägeblätter, die aufgrund ihrer tief eingeschliffenen Sägezahnreihe schwer zu bearbeiten sind, mit einer Aufspanneinrichtung und Vorschubvorrichtung handhaben zu können, bedarf es der Möglichkeit, einen stellitierten Zahn an der gleichen Position (Bearbeitungsposition) anlassen zu können, was durch die erfindungsgemäße Vorrichtung ermöglicht wird.

Um den Schweißdraht auch mit toleranzbedingten Schwankungen in Form und Durchmesser sowie einer lieferungsbedingten Verformung präzise zu einem vorbestimmten Abschmelzpunkt zuführen zu können, ist gemäß einer bevorzugten Ausführungsform der Erfindung vorgesehen, dass die Stellitiereinrichtung eine Richtrollenanordnung und eine Schweißdrahtzuführhülse aufweist. Die Richtrollenanordnung deformiert den Schweißdraht vorbestimmt, um die toleranzbedingten Schwankungen und Verformungen auszugleichen, bevor der Schweißdraht mit der Deformation einer Drahtzuführeinrichtung zugeführt wird.

Ferner führt vorzugsweise die Schweißdrahtzuführhülse den Schweißdraht zu dem vorbestimmten Abschmelzpunkt an einer Formbackenanordnung zu. An dem vorbestimmten Abschmelzpunkt wird der Schweißdraht durch den Schweißbrenner abgeschmolzen. Das geschmolzene Material dringt schwerkraftbedingt in einen Hohlraum in einer Formbackenanordnung ein, die in geschlossenem Zustand den zu stellitierenden Sägezahn umschließt und den Hohlraum an diesem Sägezahn bildet. In dem Hohlraum verbindet sich das Stellit mit dem zu stellitierenden Sägezahn, wodurch der Sägezahn mit einer Stellitschneide versehen wird.

Die vorliegende Erfindung betrifft ferner ein Verfahren zum Bearbeiten von Sägezähnen eines Sägeblattes mit einer Vorrichtung der voranstehend beschriebenen Art, das die folgenden Schritte umfasst:
A. Positionieren eines vorbestimmten Sägezahns in einer Bearbeitungsposition,
B. Verlagern eines Schweißbrenners aus einer Ruheposition in eine Schweißposition,
C. Stellitieren des vorbestimmten Sägezahns in der Bearbeitungsposition,
D. Zurückverlagern des Schweißbrenners in die Ruheposition,
E. Verlagern einer Anlassvorrichtung aus einer Ruheposition in eine Anlassposition,
F. Anlassen eines in die Bearbeitungsposition verlagerten, vorbestimmten Sägezahns,
G. Zurückverlagern der Anlasseinrichtung in die Ruheposition.

Bei einer bevorzugten Ausführungsform des voranstehend beschriebenen Verfahrens werden die Arbeitschritte A bis G derart ausgeführt, dass in einem ersten Arbeitsgang die Schritte A bis D ausgeführt werden, bis sämtliche Sägezähne eines Sägeblattes stelltiert sind, und dass nach Abschluss dieses ersten Arbeitsgangs die Schritte D bis F in einem zweiten Arbeitsgang für sämtliche Sägezähne des Sägeblattes ausgeführt werden, wobei der Schritt G einen Bearbeitungszyklus abschließt.

Die Erfindung wird im folgenden beispielhaft anhand der beiliegenden Figuren erläutert. Es stellen dar:
- Figur 1: eine perspektivische Ansicht der Stellitiervorrichtung gemäß der Erfindung;
- Figur 2: eine perspektivische, vergrößerte Ansicht des Ausschnitts I aus Figur 1;
- Figur 3: eine vergrößerte Schnittansicht des Ausschnitts I aus Figur 1;
- Figur 4: eine Vorderansicht der Stellitiervorrichtung gemäß der Erfindung;
- Figur 5: eine Draufsicht der Stellitiervorrichtung gemäß der Erfindung;
- Figur 6: eine Ansicht des vergrößerten Ausschnitts Va aus Figur 5;
- Figur 7: eine Ansicht des vergrößerten Ausschnitts Vb aus Figur 5;
- Figur 8: eine perspektivische Ansicht einer Vorrichtung zum Bearbeiten von Sägezähnen mit einer Stellitiervorrichtung gemäß der Erfindung während des Stellitierens;
- Figur 9: eine perspektivische Ansicht einer Vorrichtung zum Bearbeiten von Sägezähnen mit einer Stellitiervorrichtung gemäß der Erfindung während des Anlassens; und
- Figur 10: eine Vorderansicht einer Vorrichtung zum Bearbeiten von Sägezähnen.

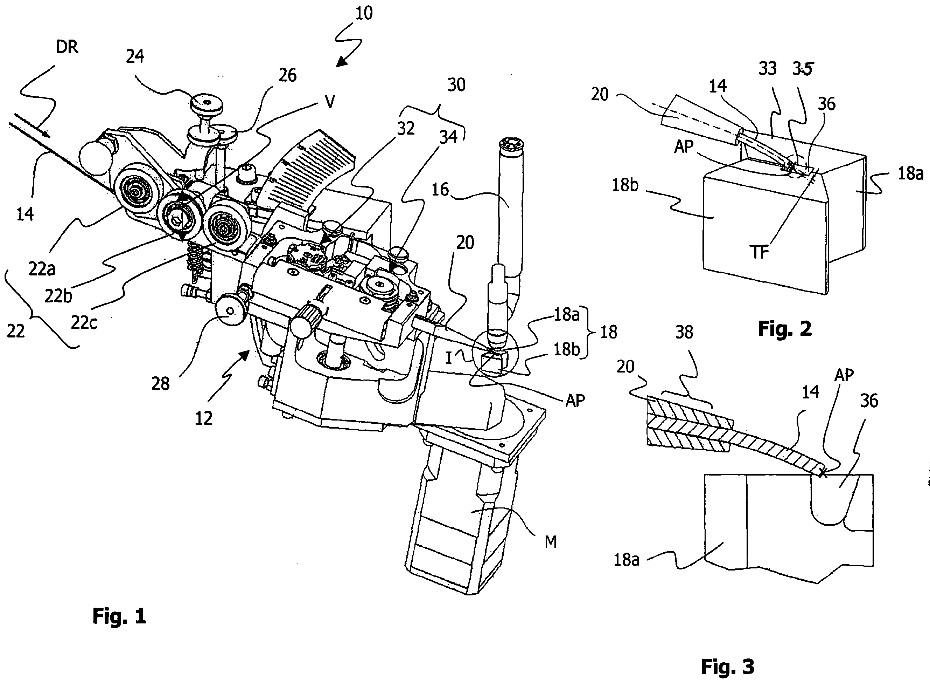

Figur 1 zeigt eine perspektivische Ansicht einer Vorrichtung zum Stellitieren von Sägezähnen, die allgemein mit 10 bezeichnet ist. Die Stellitiervorrichtung 10 umfasst eine Drahtzuführeinrichtung 12 zum Zuführen des Schweißdrahts 14 zu einem Schweißbrenner 16. Der Schweißbrenner 16 ist oberhalb einer Formbackenanordnung 18 angeordnet, die zwei Formbacken 18a und 18b aufweist. Auf die Formbackenanordnung 18 wird im weiteren Verlauf dieser Beschreibung mit Bezug auf Figur 2 und 3 detailliert eingegangen. Der Schweißbrenner 16 bringt den Stellitdraht bzw. Schweißdraht 14 zum Schmelzen und das geschmolzene Stellit dringt anschließend schwerkraftbedingt in einen hier nicht gezeigten Hohlraum in der Formbackenanordnung 18 ein.

Man erkennt ferner in Figur 1, dass an einer Drahtzuführeinrichtung 12 eine Schweißdrahtzuführhülse 20 vorgesehen ist, die den Schweißdraht 14 zu einem vorbestimmten Abschmelzpunkt AP zuführt.

Entgegen der Drahtzuführrichtung DR, in der der Schweißdraht 14 dem Schweißbrenner 16 zugeführt wird, ist der Drahtzuführeinrichtung 12 eine Richtrollenanordnung 22 vorgeschaltet. Die Richtrollenanordnung 22 weist drei Richtrollen 22a, 22b, 22c auf, um die der Schweißdraht 14 herum geführt ist. Die mittlere Richtrolle 22b der Richtrollenanordnung 22 ist in vertikaler Richtung verlagerbar, wie durch den Doppelpfeil V angedeutet, wodurch die Deformation des Schweißdrahts 14 beeinflusst werden kann. Mit anderen Worten wird der Schweißdraht 14 durch die Richtrollenanordnung 22 und hier insbesondere durch die Richtrolle 22b vorbestimmt deformiert und anschließend der Drahtzuführeinrichtung 12 zugeleitet. Die Richtrolle 22b kann durch die Stellschraube 24 vertikal verlagert werden, wodurch der Deformationsgrad des Schweißdrahts beeinflusst oder die Richtrollenanordnung 22 auf unterschiedliche Durchmesser des Schweißdrahts 14 eingestellt werden kann.

In Figur 1 erkennt man ferner Stellschrauben 26 und 28, durch die die Stellitiervorrichtung 10 horizontal und vertikal verlagert werden kann. Zur Bearbeitung unterschiedlicher Sägeblätter, wie z.B. Kreissägeblätter, Gattersägeblätter und Bandsägeblätter, kann es notwendig sein, die Stellitiervorrichtung 10 relativ zu einem vorbestimmten Abschmelzpunkt zu verlagern. Mit der Stellschraube 28 ist es möglich, die Position der Drahtzuführeinrichtung 12 derart einzustellen, dass die Drahtzuführeinrichtung 12 immer auf einen Flächenmittelpunkt einer der Schweißdrahtzuführhülse 20 zugewandten Fläche 33 der Formbackenanordnung gerichtet ist (Fig. 2), der bevorzugt mit einem vorbestimmten Abschmelzpunkt übereinstimmt.

Die hier gezeigten Stellschrauben 24, 26, 28 zum Verlagern der Richtrolle 22b bzw. zum Verlagern der Stellitiervorrichtung 10 können selbstverständlich durch Motoren ersetzt werden, die beispielsweise durch eine CNC-Steuerung angesteuert werden können. Die Erfindung ist daher nicht auf die Nutzung von Stellschrauben zur Verlagerung der verschiedenen Komponenten beschränkt.

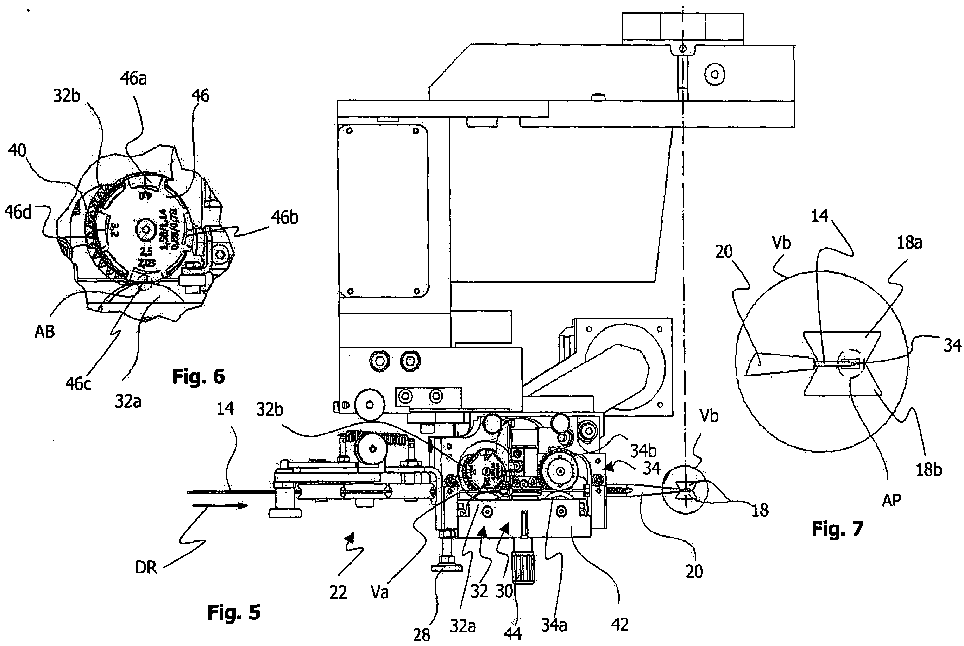

Um dem Schweißbrenner 16 bzw. dem vorbestimmten Abschmelzpunkt zugeführt zu werden, wird der Schweißdraht 14 durch die Drahtzuführeinrichtung 12 angetrieben. Die Drahtzuführeinrichtung 12 sieht dazu eine Rollenanordnung 30 vor, die von zwei Rollenpaaren 32 und 34 gebildet wird. Die Rollen eines Rollenpaares 32 und 34 sind antriebsmäßig miteinander gekoppelt und werden durch einem Motor M beispielsweise über ein Getriebe angetrieben. Der Schweißdraht 14 wird durch Rollenpaare 32 und 34 hindurchgeführt und angetrieben. In Figur 1 ist jeweils nur eine Rolle der Rollenpaare 32 und 34 vollständig gezeigt. Auf die Drahtzuführeinrichtung 12 wird jedoch mit Bezug auf Figur 5 detailliert eingegangen.

Wie bereits mehrfach erwähnt, wird der Schweißdraht 14 durch die Richtrollenanordnung 22 vorbestimmt deformiert und mit dieser vorbestimmten Deformation mittels der Schweißdrahtzuführhülse 20 einem vorbestimmten Abschmelzpunkt AP (Fig. 2) zugeführt.

Figur 2 zeigt eine vergrößerte perspektivische Darstellung des Ausschnitts I aus Figur 1. Man erkennt die Formbackenanordnung 18 mit zwei Formbacken 18a und 18b. Im geschlossenen Zustand bildet die Formbackenanordnung 18 an einer der Schweißdrahtzuführhülse 20 zugewandten Fläche 33 eine Öffnung 35, die in einen in Figur 2 angedeuteten Hohlraum 36 in der Formbackenanordnung 18 mündet.

In Figur 2 erkennt man zudem die Schweißdrahtzuführhülse 20, die den Schweißdraht 14 mit der vorbestimmten Deformation, hier einer Krümmung, zu dem in Figur 2 durch einen Kreis angedeuteten Abschmelzpunkt AP führt. Durch die Deformation des Schweißdrahts 14 werden toleranzbedingte Schwankungen der Form und des Durchmessers des Drahtes sowie lieferbedingte Verformungen ausgeglichen und somit sichergestellt, dass der Schweißdraht 14 bei mehreren aufeinander folgenden Stellitiervorgängen innerhalb der Toleranz den vorbestimmten Abschmelzpunkt AP trifft. In Figur 2 ist zudem schematisch dargestellt mit welch hoher Präzision, nämlich innerhalb eines Toleranzfeldes TF von 0,1 mm, der Schweißdraht 14 den Abschmelzpunkt AP treffen muss. Diese Präzision ist notwendig, um das durch den Schweißbrenner 16 geschmolzene Stellit exakt portioniert, d.h. ein vorbestimmtes Volumen, gleichmäßig und lunkerfrei in dem in der Formbackenanordnung 18 gebildeten Hohlraum 36 durch die Schwerkraft "einfließen" zu lassen.

Figur 3 zeigt eine vergrößerte Schnittansicht des Ausschnitts I aus Figur 1. Man erkennt wiederum die Schweißdrahtzuführhülse 20, die den Schweißdraht 14 mit einer vorbestimmten Deformation zu der Formbackenanordnung 18 (hier nur der Formbacken 18a gezeigt) zuführt. Aus Figur 3 erkennt man, dass es sich bei der Deformation des Schweißdrahts 14 bevorzugt um eine Krümmung "nach unten" handelt. Mit dieser Krümmung legt sich der Schweißdraht 14 in einem Anlagebereich 38 an die Schweißdrahtzuführhülse 20 an. Durch die Anlage an der Schweißdrahtzuführhülse 20 wird der Schweißdraht 14 definiert an der Hülse 20 abgelenkt und dem vorbestimmten Abschmelzpunkt AP zugeführt. Mit anderen Worten bildet der Anlagebereich 38 in der Schweißdrahtzuführhülse 20 eine Art "Führung" für den Schweißdraht 14, die eine Ansteuerung des vorbestimmten Abschmelzpunkts AP mit einer reproduzierbar hohen Präzision ermöglicht. In Figur 3 erkennt man ferner, einen Ausschnitt des Hohlraums 36 in der Formbacke 18a. Die Formbackenanordnung 18 umschließt im geschlossenen Zustand den zu stellitierenden Sägezahn und bildet den Hohlraum 36, in den das geschmolzene Stellit eindringen und sich mit dem Sägezahn verbinden kann.

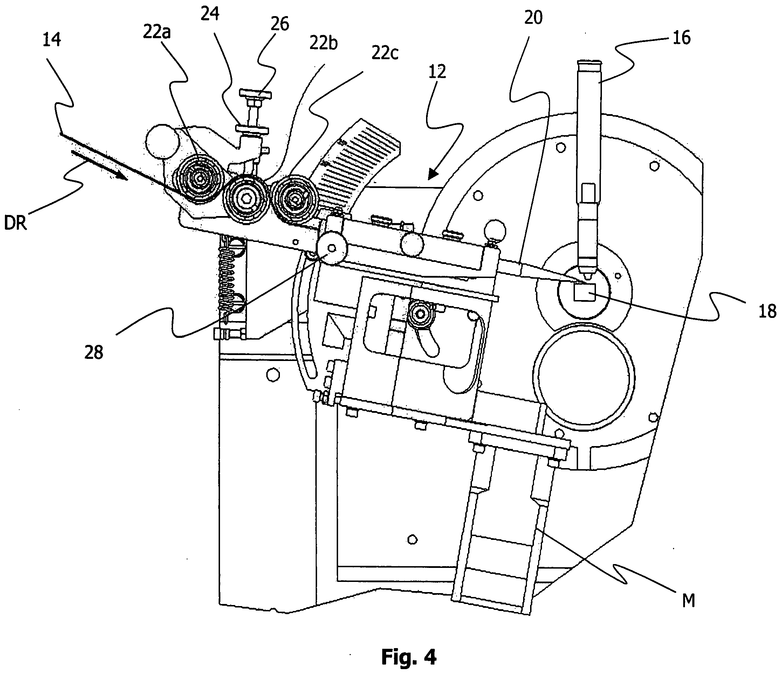

Figur 4 zeigt eine Vorderansicht der Stellitiervorrichtung 10. Aus Figur 4 erkennt man deutlich wie der Schweißdraht 14 durch die Richtrollenanordnung 22 umgelenkt und deformiert wird. Nach der Deformation durch die Richtrollen 22a, 22b, 22c der Richtrollenanordnung 22 wird der durch die Drahtzuführeinrichtung 12 angetriebene Schweißdraht 14 mittels der Schweißdrahtzuführhülse 20 einem vorbestimmten Abschmelzpunkt AP zugeführt, an dem ein vorbestimmtes Volumen durch den Schweißbrenner 16 von ihm abgeschmolzen wird. Das abgeschmolzene Stellit dringt in die Formbackenanordnung 18 ein und verbindet sich dort mit dem von der Formbackenanordnung 18 umschlossenen Sägezahn eines Sägeblatts.

Figur 5 zeigt eine Draufsicht der Stellitiervorrichtung 10. Aus Figur 5 wird wiederum ersichtlich, wie der Schweißdraht 14 von einer hier nicht gezeigten Bevorratungsrolle in der Drahtzuführrichtung DR der Richtrollenanordnung 22 zugeführt wird und durch diese vorbestimmt deformiert wird. Nach der Richtrollenanordnung 22 folgt die den Schweißdraht 14 antreibende Drahtzuführeinrichtung 12. Die Drahtzuführeinrichtung 12 weist, wie bereits erwähnt, eine Rollenanordnung 30 mit zwei Rollenpaaren 32 und 34 auf. Die Rollen 32a, 32b und 34a, 34b der Rollenpaare 32, 34 sind antriebsmäßig über Zahnradscheiben 40 (in Fig. 6 ersichtlich) miteinander gekoppelt.

Die Rollen 32a und 34a sind an einem Ausgleichelement 42 angeordnet, das federnd gelagert ist und die Rollen 32a, 34a in Richtung der Rollen 32b, 34b vorspannt. Die Vorspannkraft, mit der das Ausgleichelement 42 die Rollen 32a, 34a gegen die Rollen 32b, 34b vorspannt, kann über eine Stellschraube 44 eingestellt und somit an verschiedene Durchmesser von Stellitdrähten 14 angepasst werden. Da die Rollen 32a, 32b, 34a, 34b der Rollenpaare 32, 34 den Stellitdraht 14 durch eine Reibwirkung zwischen Rollen 32a, 32b, 34a, 34b und Schweißdraht 14 transportieren bzw. antreiben, kann es notwendig sein, den Anpressdruck bzw. die Vorspannkraft je nach Durchmesser des Schweißdrahtes 14 durch die Stellschraube 44 an dem Ausgleichelement 42 zu erhöhen oder zu senken.

An der Rolle 32b ist eine Anschlaganordnung 46 vorgesehen, auf die mit Bezug auf Figur 6 näher eingegangen wird. Die Rolle 32a stützt sich an der Anschlaganordnung 46 ab, wodurch verhindert wird, dass sich die Rollen 32a und 32b aneinander anlegen und der Draht 14 nicht mehr durch diese hindurch bewegt werden kann.

Figur 6 zeigt eine vergrößerte Ansicht des Ausschnitts Va aus Figur 5. In Figur 6 erkennt man die Anschlaganordnung 46, die auf der Rolle 32b angeordnet ist. Ferner ist in Figur 6 deutlich ersichtlich, dass unterhalb der Rolle 32b eine Zahnradscheibe 40 vorgesehen ist, durch die die beiden Rollen 32a und 32b antriebsmäßig gekoppelt sind und an dem Schweißdraht 14 zum Vorschub angreifen. Mit anderen Worten wird eine der Rollen 32a, 32b, 34a, 34b direkt von dem Motor M angetrieben und die angetriebene Rolle 32a, 32b, 34a, 34b übertragt das von dem Motor M erzeugte Drehmoment über die Zahnradscheibe 40 auf die jeweils andere Rolle 32a, 32b, 34a, 34b eines Rollenpaares 32, 34. Die antriebsmäßige Kopplung zwischen den Rollen 32a, 32b, 34a, 34b muss jedoch nicht gegeben sein, da auch ein direkter Antrieb der Rollen 32a, 32b, 34a, 34b durch den Motor M denkbar ist.

Aus Figur 6 wird zudem deutlich, wie sich die Rolle 32a an der Abstützstelle AB an der Anschlaganordnung 46 abstützt. Da beim Stellitieren von Sägezähnen ein exakt definiertes Materialvolumen in den von den Formbacken 18a und 18b gebildeten Hohlraum 36 eingefüllt werden soll, wird der Schweißdraht 14 nach dem Abschmelzen immer in eine vorher definierte Ausgangsposition zurückgefahren. Ist ein Drahtende des Schweißdrahtes 14 bereits über das Rollenpaar 32 mit den Rollen 32a, 32b hinaus nach vorne in Richtung der Schweißdrahtzuführhülse 20 gefördert worden, würde sich die Rolle 32a ohne Anschlaganordnung 46 aufgrund der Vorspannung durch das Ausgleichelement 42 an die Rolle 32b anlegen. Der Draht 14 könnte nicht in seine vordefinierte Ausgangsposition zurückgefahren werden. Der Schweißdraht 14 könnte an den aneinander anliegenden Rollen 32a und 32b blockiert und verformt werden und schlimmstenfalls von der definierten Ausgangsposition abweichen. Da der Draht 14 dann nicht in die vorbestimmte Ausgangsposition zurückgefahren werden kann, könnte es sogar zu Schäden an dem zu bearbeitenden Sägeblatt kommen, d.h. es würde Ausschuss produziert.

Die definierte Ausgangsposition für das Zuführen des Schweißdrahtes 14 wird benötigt, um den Schweißdraht 14 entsprechend dem abgeschmolzenen Volumen nachführen bzw. dem vorbestimmten Abschmelzpunkt AP zuführen zu können. Mit anderen Worten wird der Schweißdraht 14 nach jedem Abschmelzvorgang in die definierte Ausgangsposition zurückgefahren, um präzise einen Schweißdrahtabschnitt 14 zu dem Abschmelzpunkt zuzuführen, dessen Länge in Abhängigkeit von seinem Durchmesser dem vorbestimmen Volumen entspricht, das zur Füllung des Hohlraums 36 benötigt wird. Dadurch wird verhindert, dass einzelne Sägezähne mit zuviel oder zuwenig Stellit bzw. einer zu großen oder zu kleinen Stellitschneide versehen werden und somit unbrauchbare Sägeblätter als Ausschuss produziert werden.

Durch die Anschlaganordnung 46 wird eine unerwünschte Deformation des Schweißdrahtes 14 verhindert, da die Anschlaganordnung 46 einen vorbestimmten Sollabstand zwischen den Rollen 32a und 32b des Rollenpaars 32 festlegt. Mit anderen Worten begrenzt die Anschlaganordnung 46 die Auslenkung der Rolle 32a in Richtung der Rolle 32b aufgrund der Vorspannung durch das Ausgleichelements 42. Die Anschlaganordnung 46 wirkt der Vorspannung der Rolle 32a entgegen und begrenzt dadurch die Auslenkung der vorgespannten Rolle 32a in Richtung der anderen Rolle 32b des Rollenpaares 32. Dementsprechend kann der Schweißdraht 14 selbst in dem Fall, in dem ein Drahtende bereits über die gegenüberliegenden Rollen 32a, 32b hinaus in Richtung des Schweißbrenners 16 gefahren wurde, in seine definierte Ausgangsposition zurückgefahren werden. Mit anderen Worten ermöglicht die Drahtzuführeinrichtung 12 die Nutzung von Schweißdrähten 14 mit unterschiedlichen Durchmessern über die gesamte Länge des Schweißdrahtes 14 und verhindert, dass Ausschuss produziert wird.

Figur 6 zeigt ferner, dass es sich bei der Anschlaganordnung 46 um eine Scheibe mit verschiedenen Segmenten 46a, 46b, 46c, 46d handelt, die jeweils einen bestimmten Radius repräsentieren, der mit dem gewünschten Sollabstand zwischen den Rollen 32a und 32b übereinstimmt. Der Sollabstand zwischen den Rollen 32a und 32b kann durch Verdrehen der Scheibe 46 auf bestimmte Drahtdurchmesser des Schweißdrahts 14 eingestellt werden. Mit anderen Worten werden die Segmente 46a, 46b, 46c, 46d der Scheibe 46 in eine andere Position verlagert, wodurch sich die Rolle 32a an ein anderes, mit einem anderen Radius ausgebildeten Segment 46 anlegt und somit einen anderen Sollabstand bzw. Drahtdurchmesser zwischen den Rollen 32a und 32b einstellt. Die Anschlaganordnung 46 stellt durch den vorbestimmten Sollabstand zwischen den Rollen 32a und 32b sicher, dass der Draht 14 immer in seine definierte Ausgangsposition zurückgefahren werden kann, unabhängig davon, ob ein Drahtende bereits über die Rollen 32a und 32b hinaus gefördert wurde. Ferner verhindert die Anschlaganordnung 46 Schäden an dem zu bearbeitenden Sägeblatt und somit teueren Ausschuss.

Die Anschlaganordnung 46 ist jedoch nicht auf diese Scheibenform mit Segmenten beschränkt, die verschiedene Radien repräsentieren. Es sind auch auswechselbare Einzelanschläge, eine Scheibe mit sich stetig ändernden Radien oder eine Stellschraube zum Einstellen der gewünschten Sollabstände denkbar.

Figur 6 zeigt zudem, dass an der Anschlaganordnung 46, d.h. der Scheibe 46, eine Skalierung angebracht ist, die jeweils den Drahtdurchmesser angibt, der mit einem der Segmente 46a, 46b, 46c, 46d eingestellt werden kann. Mit anderen Worten beschreibt die Skalierung den Sollabstand, der durch das jeweilige Segment 46a, 46b, 46c, 46d zwischen den Rollen 32a und 32b eingestellt wird.

Figur 7 zeigt eine vergrößerte Ansicht des Ausschnitts Vb. In dieser Draufsicht erkennt man wiederum wie der Schweißdraht 14 durch die Schweißdrahtzuführhülse 20 zu der Formbackenanordnung 18 mit den Formbacken 18a und 18b zugeführt wird. In Figur 7 ist ein Bereich um den vorbestimmten Abschmelzpunkt AP schematisch dargestellt, der auf der Fläche 33 oberhalb der Öffnung 35 liegt. Diesen Abschmelzpunkt AP gewährleistet, dass das geschmolzene Stellit durch die Schwerkraft in die Öffnung 35 des von den Formbacken 18a und 18b gebildeten Hohlraum 36 eindringen kann und sich dort mit dem hier nicht gezeigten Sägezahn verbindet. Bevorzugt ist hierbei, dass der vorbestimmte Abschmelzpunkt AP mit dem Flächenmittelpunkt der der Schweißdrahtzuführhülse 20 zugewandten Fläche 33 der Formbackenanordnung 18 übereinstimmt.

Im Folgenden soll mit Bezug auf die Figuren 1 bis 7 ein Verfahren zum Stellitieren von Sägezähnen beschrieben werden. Bei einem Stellitiervorgang muss der Schweißdraht mit einer hohen Präzision - innerhalb eines Toleranzfeldes TF von 0,1 mm - einem vorbestimmten Abschmelzpunkt AP zugeführt werden. Das Einhalten dieses engen Toleranzfelds TF wird durch herstellungsbedingte Toleranzen, die die Form und den Durchmesser des Schweißdrahts 14 betreffen, sowie durch von einem Abwickelvorgang einer Bevorratungsrolle herrührenden Verformungen erschwert. Dementsprechend wird der Schweißdraht 14 durch die Richtrollenanordnung 22 mit einer vorbestimmten Deformation, insbesondere einer Krümmung, versehen und durchläuft mit dieser vorbestimmten Deformation die den Schweißdraht 14 antreibende Drahtzuführeinrichtung 12.

Die Drahtzuführeinrichtung 12 führt den Schweißdraht 14 jeweils entsprechend dem vorbestimmten Füllvolumen des Hohlraums 36 in der Formbackenanordnung 18 zu dem Abschmelzpunkt AP bzw. dem Schweißbrenner 16 zu. Mit anderen Worten wird ein Abschnitt des Schweißdrahtes 14 zu dem Schweißbrenner zugeführt, dessen Schmelze dem Füllvolumen des Hohlraums 36 entspricht. Hierzu ist es notwenig, den Schweißdraht 14 vor jedem neuen Abschmelzvorgang zurück in seine definierte Ausgangsposition zu fahren und erneut dem Abschmelzpunkt AP zuzuführen, um sicherzustellen, dass jeweils nur der dem Füllvolumen entsprechende Drahtabschnitt abgeschmolzen wird. Mit der Anschlaganordnung 46, die einen Sollabstand zwischen den Rollen 32a und 32b einstellt, kann der Schweißdraht 14 über seine gesamte Länge in die definierte Ausgangsposition zurückgefahren werden.

Nach der Drahtzuführeinrichtung 12 wird der Schweißdraht 14 mit der vorbestimmten Deformation mittels der Schweißdrahtzuführhülse 20 zu dem vorbestimmten Abschmelzpunkt AP zugeführt. Durch die vorbestimmte Deformation legt sich der Schweißdraht 14 in einem Anlagebereich 38 an die Schweißdrahtzuführhülse 20 an. Der Anlagebereich 38 bildet hier eine Führung für den Schweißdraht 14, wodurch dieser exakt zu dem vorbestimmten Abschmelzpunkt AP geführt wird. Diese Anlage an dem Anlagebereich 38 ermöglicht auch die reproduzierbar hohe Präzision der Zuführung zum Abschmelzpunkt AP, da der Schweißdraht 14 an dem Anlagebereich 38 der Schweißdrahtzuführhülse 20 in Richtung des Abschmelzpunktes AP abgelenkt wird und diesen innerhalb der engen Toleranz ansteuert. Erreicht der Schweißdraht 14 den Abschmelzpunkt AP, wird durch den Schweißbrenner 16 ein vorbestimmtes Volumen abgeschmolzen. Die Stellitschmelze dringt, bedingt durch die Schwerkraft, durch die Öffnung 35 in den von der Formbackenanordnung 18a und 18b gebildeten Hohlraum 36 ein, der einer Negativform des zu stellitierenden Sägezahns entspricht. In diesem Hohlraum 36 verbindet sich das geschmolzene Stellit mit dem zu stellitierenden Sägezahn. Anschließend wird die Formbackenanordnung 18 geöffnet und der Stellitiervorgang ist abgeschlossen.

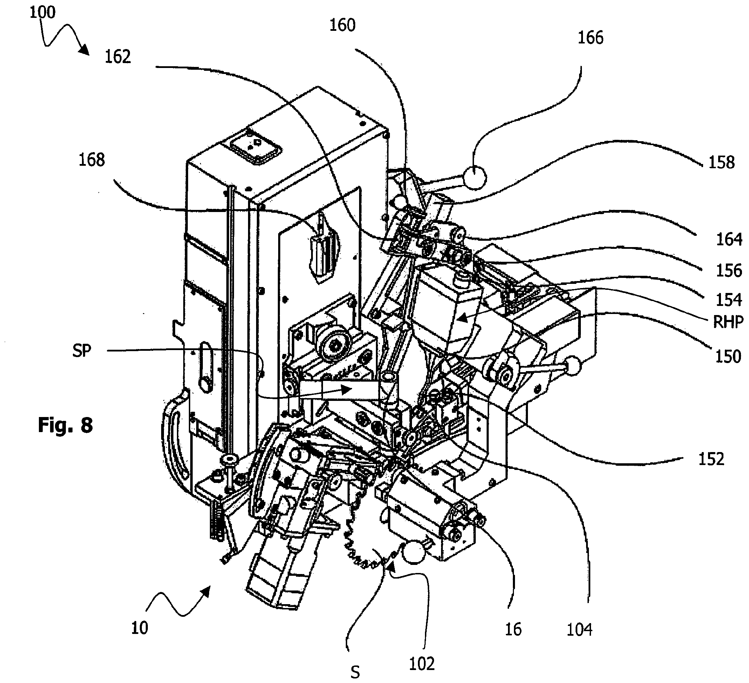

Figur 8 zeigt eine Maschine 100 zum Bearbeiten von Sägezähnen, insbesondere dem Stellitieren und Anlassen von Sägezähnen von verschiedenartigen Sägeblättern. An der Vorrichtung 100 ist eine Stellitiervorrichtung 10 der voranstehend beschriebenen Art angeordnet. Neben der Stellitiervorrichtung 10 weist die Vorrichtung 100 auch eine Einrichtung 150 zum Anlassen der stellitierten Sägezähne auf. Das Anlassen stellitierter Sägezähne wird notwendig, da durch das Stellitieren hohe Temperaturen auf das Material des Sägeblattes einwirken. Durch diese hohen Temperaturen bzw. durch das Abkühlen des Sägezahns nach dem Stellitieren können Verspannungen und Änderungen des Materialgefüges in das Material des Sägeblatts S eingebracht werden, die einen Verzug in dem Sägeblatt S und/oder einen Bruch eines Sägezahns auf dem Sägeblatt S hervorrufen können und dessen Funktion beeinträchtigen können.

Das Anlassen erfolgt mit einer Hochfrequenz-Anlasseinrichtung 150, wobei das erneute Zuführen von Wärme zu dem Sägezahn bzw. Sägeblatt S zu einer Gefügeveränderung in dem Material des Sägeblatts S führt, wodurch Verspannungen in dem Material abgebaut werden. Mit anderen Worten wird durch das Anlassen mit der Hochfrequenz-Anlasseinrichtung 150 eine Rekristallisation in dem Gefüge des Sägeblattes herbeigeführt.

Wie bereits erwähnt, können mit der Maschine 100 wechselweise zwei verschiedene Bearbeitungsvorgänge durchgeführt werden, nämlich das Stellitieren und das Anlassen. Das zu bearbeitende Sägeblatt S wird mit einer Aufspanneinrichtung 102 in der Vorrichtung 100 angebracht. Um jeden einzelnen Sägezahn jeweils in die Bearbeitungsposition bringen zu können, weist die Vorrichtung 100 zudem eine CNCgesteuerte Vorschubeinrichtung 104 auf. Mit der Vorschubeinrichtung 104 kann jeweils ein vorbestimmter Sägezahn in die Bearbeitungsposition überführt werden. In bestimmten Anwendungsfällen kann es aus prozesstechnischen Gründen notwendig sein, bei Sägeblättern S mit verschiedenen Materialeigenschaften, die gerade stellitierten Sägezähne in einem oder mehreren weiteren Bearbeitungsdurchläufen anzulassen, wobei das Sägeblatt S in der gleichen Aufspanneinrichtung 102 verbleibt. Das Stellitieren und Anlassen erfolgt mit der gleichen Vorschubeinrichtung 104, wobei die Bearbeitungsreihenfolge der Sägezähne Voreingestellt werden kann.

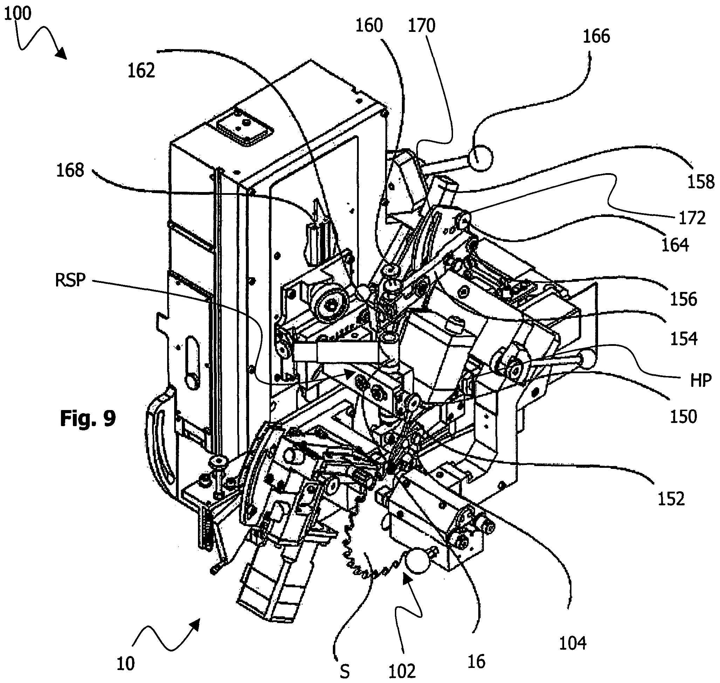

Zur Durchführung des Anlassens weist die Anlasseinrichtung 150 eine austauschbare Induktionsschlaufe 152 auf, die je nach Form und Größe des Sägezahns ausgetauscht werden kann. Die Anlasseinrichtung 150 ist an einer Hebelanordnung 154 angeordnet. Die Hebelanordnung 154 ist um einen Drehpunkt 156 verlagerbar. Durch Verlagern der Hebelanordnung 154 um den Drehpunkt 156 und Führen durch eine hier nicht gezeigte Kurvennut kann die Anlasseinrichtung 150 eine geradlinige Bewegung in Richtung des zu bearbeitenden Sägezahns ausführen. Die Anlasseinrichtung 150 bzw. die Hebelanordnung 154 wird über einen steuerbaren Antrieb 158 von einer Ruheposition RHP (Fig.8) in eine Anlassposition HP (Fig. 9), d.h. in Richtung des zu bearbeitenden Sägezahns oder aus der Anlassposition HP zurück in die Ruheposition RHP weg von dem anzulassenden Sägezahn bewegt. Anstelle der Hebelanordnung 154 ist beispielsweise auch eine Stellschlittenanordnung denkbar. Die Erfindung ist daher nicht auf eine Hebelanordnung 154 beschränkt.

Die Induktionsschlaufe 152 kann über verschiedene Justiereinrichtungen bzw. Stellschrauben auf das zu bearbeitende Sägeblatt S eingestellt werden. Die Anlasseinrichtung 150 kann über die Stellschraube 160 in vertikaler Richtung und über die Stellschraube 162 in horizontaler Richtung zu dem zu bearbeitenden Sägezahn verlagert und so auf das jeweilige Sägeblatt S eingestellt werden. Ferner ist eine Einstellung der Lage der Induktionsschleife 152 quer zu einer Einspannebene des Sägeblattes durch die Stellschraube 164 möglich. Mit anderen Worten kann die Lage der Induktionsschlaufe 152 derart verändert werden, dass der zu bearbeitende Sägezahn in der Mitte zwischen den beiden Schlaufenabschnitten der Induktionsschlaufe 152 liegt. Durch die Stellschrauben 160, 162, 164 ist eine Verlagerung der Induktionsschlaufe 152 in drei Richtungen zu dem Sägeblatt S möglich. Als Alternative zu Stellschrauben 160, 162, 164 sind hier auch andere Stellglieder denkbar, wie z.B. Exzenter, da es sich um kurze Stellwege handelt.

Figur 8 zeigt die Maschine 100 in der Position, in der die Stellitiervorrichtung 10 einen ausgewählten Sägezahn stellitieren kann. Um nun vom Stellitiervorgang zu dem Anlassvorgang wechseln zu können, wird der Plasmabrenner 16 entweder manuell über einen Positionierhebel 166 oder automatisch über einen Positionierantrieb 168 aus einer Schweißposition SP, d.h. weg von dem Sägeblatt S, in eine Ruheposition RSP (Fig. 9) verlagert und die Anlasseinrichtung 150 durch den Antrieb 158 in ihre Anlassposition HP und in Richtung des anzulassenden Sägezahns bewegt.

Figur 9 zeigt die Maschine 100 in der Position während des Anlassens. Wie man aus Figur 9 erkennt, wurde die Anlasseinrichtung 150 mit der Induktionsschlaufe 152 in die Anlassposition HP, d.h. in Richtung des Sägeblatts S bzw. des zu bearbeitenden Sägezahns, bewegt. Aus Figur 9 wird nun ersichtlich, dass die Hebelanordnung 154 zum Verlagern der Anlasseinrichtung 150 entlang einer Kurvennut 170 in der Halterung 172 um den Drehpunkt 156 verlagert werden kann. Dadurch wird eine annähernd geradlinige Bewegung der Induktionsschlaufe 152 in Richtung des Sägeblattes S erreicht.

Aus Figur 9 wird zudem ersichtlich, dass das Sägeblatt S in der gleichen Aufspanneinrichtung 102 verbleibt, wie beim Stellitieren. Mit anderen Worten können zum Stellitieren und Anlassen die gleiche Vorschubeinrichtung 104 und die gleiche Aufspanneinrichtung 102 verwendet werden. Es ist somit möglich mit der Vorrichtung 100 in einem ersten Durchgang alle Sägezähne zu stellitieren und diese anschließend in einem zweiten Durchgang mit der Anlasseinrichtung 150 anzulassen. Dabei muss das Sägeblatt S nicht umgespannt und ausgerichtet werden, sondern kann in seiner Aufspanneinrichtung 102 verbleiben.

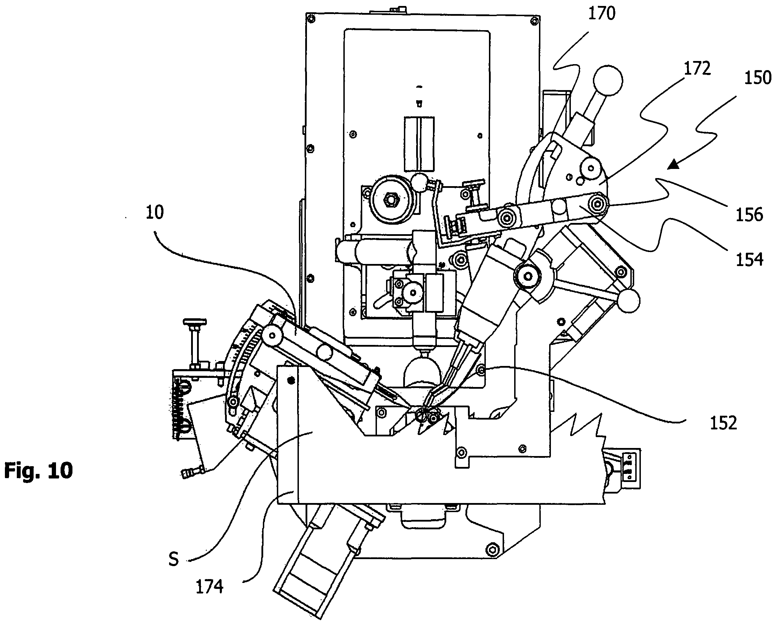

Figur 10 zeigt eine Vorderansicht der Maschine 100 mit der Stellitiereinrichtung 10 und der Anlasseinrichtung 150. Man erkennt ferner die Induktionsschlaufe 152 an der Anlassvorrichtung 150 und die um den Drehpunkt 156 verlagerbare Hebelanordnung 154. Der Hebelanordnung 154 kann entlang der Kurvennut 170 in der Halterung 172 bewegt werden.

Figur 10 stellt einen Spezialfall dar, da in diesem Fall ein Gattersägeblatt S stellitiert und angelassen werden soll. Gattersägeblätter S sind aufgrund ihrer tief eingeschliffenen Zahnreihe und insbesondere in Randbereichen der Zahnreihe schwierig zu bearbeiten. Ferner zeigt Figur 10 Einhangleisten 174, die Teil des Gattersägeblattes S sind. Bei Gattersägeblättern werden die Einhangleisten 174 benötigt, um das Sägeblatt S bei einem Anwender in dessen Gatterrahmen einhängen zu können. Für das Stellitieren/Anlassen wir das Gattersägeblatt in der Aufspanneinrichtung 102 eingespannt. Auch ein Gattersägeblatt S kann in der Aufspanneinrichtung 102 verbleiben und mit der Vorschubeinrichtung 104 verschiedene Sägezähne in der Bearbeitungsposition positioniert werden. Mit anderen Worten können auch bei einem Gattersägeblatt S alle Sägezähne stellitiert und angelassen werden, wobei das Gattersägeblatt S in der Aufspanneinrichtung 102 verbleibt und durch die Vorschubeinrichtung 104 vorbestimmte Sägezähne in der Bearbeitungsposition positioniert werden.

## Patentansprüche

1. Vorrichtung (100) zum Bearbeiten von Sägezähnen eines Sägeblattes (S) mit
- einer Aufspanneinrichtung (102) zum Einspannen und Führen des zu bearbeitenden Sägeblatts (S),
- einer Vorschubeinrichtung (104) zum Verlagern eines vorbestimmten Sägezahns des Sägeblattes (S) in eine vorbestimmte Bearbeitungsposition,
- einer Stellitiervorrichtung (10), die eine Drahtzuführeinrichtung (12) und einen Schweißbrenner (16) aufweist, und mit
- einer Anlasseinrichtung (150) zum Zuführen von Wärme zu einem Sägezahn,
**dadurch gekennzeichnet, dass** zum Bearbeiten eines vorbestimmten, in die Bearbeitungsposition verlagerten Sägezahns wechselweise der Schweißbrenner (16) der Stellitiervorrichtung (10) aus einer Ruheposition (RSP) in eine Schweißposition (SP) und die Anlasseinrichtung (150) aus einer Ruheposition (RHP) in eine Anlassposition (HP) und zurück verlagerbar sind, wobei die Anlasseinrichtung Wärme zu dem vorbestimmten, in die Bearbeitungsposition verlagerten Sägezahn zuführt.

2. Vorrichtung (100) nach Anspruch 1,
**dadurch gekennzeichnet, dass** die Anlassvorrichtung (150) manuell oder durch einen steuerbaren Antrieb (158) aus der Ruheposition in die Anlassposition verlagerbar ist.

3. Vorrichtung (100) nach Anspruch 1 oder 2,
**dadurch gekennzeichnet, dass** die Anlasseinrichtung (150) an einer Hebelanordnung (154) angeordnet ist und mittels der Hebelanordnung (154) aus der Ruheposition (RHP) in die Anlassposition (HP) verlagerbar ist.

4. Vorrichtung (100) nach Anspruch 3,
**dadurch gekennzeichnet, dass** die Hebelanordnung (154) derart an einer Halterung angeordnet (172) ist, dass die Anlasseinrichtung (150) eine zumindest annähernd geradlinige Bewegung aus der Ruheposition (RHP) in die Anlassposition (HP) und zurück ausführt.

5. Vorrichtung (100) nach Anspruch 3,
**dadurch gekennzeichnet, dass** die Hebelanordnung (154) derart angeordnet ist, dass die Anlasseinrichtung (150) eine Bewegung entlang einer gekrümmten Kurve, insbesondere entlang einer kreisförmig gekrümmten Kurve, aus der Ruheposition (RHP) in die Anlassposition (HP) und zurück ausführt.

6. Vorrichtung (100) nach Anspruch 1 oder 2,
**dadurch gekennzeichnet, dass** die Anlasseinrichtung (150) mittels einer Schlittenanordnung aus der Ruheposition (RHP) in die Anlassposition (HP) und zurück verlagerbar ist.

7. Vorrichtung (100) nach einem der Ansprüche 1 bis 6,
**dadurch gekennzeichnet, dass** die Vorschubeinrichtung (104) derart steuerbar ist, dass der gleiche Sägezahn zum aufeinanderfolgenden Stellitieren und zum Anlassen in der Bearbeitungsposition verbleibt.

8. Vorrichtung (100) nach Anspruch 7,
**dadurch gekennzeichnet, dass** die Vorschubeinrichtung (104) derart steuerbar ist, dass zum Stelliteren und Anlassen jeweils ein anderer Sägezahn in die Bearbeitungsposition verlagerbar ist.

9. Vorrichtung (100) nach Anspruch 6 und 7,
**dadurch gekennzeichnet, dass** die Vorschubeinrichtung (104) mittels einer CNC-Steuerung steuerbar ist.

10. Vorrichtung (100) nach der vorangehenden Ansprüche,
**dadurch gekennzeichnet, dass** der Schweißbrenner (16) über einen Positionierhebel (166) oder einen Positionierantrieb (168) verlagerbar ist.

11. Vorrichtung (100) nach einem der vorangehenden Ansprüche,
**dadurch gekennzeichnet, dass** die Anlasseinrichtung (150) als eine Hochfrequenz-Anlasseinrichtung ausgebildet ist, die eine auswechselbare Induktionsschlaufe (152) aufweist.

12. Vorrichtung (100) nach Anspruch 11,
**dadurch gekennzeichnet, dass** die Induktionsschlaufe (152) relativ zu dem zu bearbeitenden Sägezahn verlagerbar ist.

13. Vorrichtung (100) nach Anspruch 11 oder 12,
**dadurch gekennzeichnet, dass** die Induktionsschlaufe (152) in vertikaler und horizontaler Richtung relativ zu dem Sägezahn verlagerbar ist.

14. Vorrichtung (100) nach einem der Ansprüche 11 bis 13,
**dadurch gekennzeichnet, dass** die Induktionsschlaufe (152) quer zu dem Sägeblatt (S) verlagerbar ist.

15. Vorrichtung (100) nach einem der vorangehenden Ansprüche,
**dadurch gekennzeichnet, dass** die Induktionsschlaufe (152) über zumindest eine Stellschraube (160, 162, 164) oder zumindest eine Exzenteranordnung verlagerbar ist.

16. Vorrichtung (100) nach einem der vorangehenden Ansprüche,
**dadurch gekennzeichnet, dass** die Stellitiereinrichtung (10) eine Richtrollenanordnung (22) und eine Schweißdrahtzuführhülse (20) aufweist.

17. Vorrichtung (100) nach Anspruch 16,
**dadurch gekennzeichnet, dass** die Schweißdrahtzuführhülse (20) den Schweißdraht (14) zu einem vorbestimmten Abschmelzpunkt (AP) an einer Formbackenanordnung (18) zuführt.

18. Verfahren zum Bearbeiten von Sägezähnen eines Sägeblätter (S) mit einer Vorrichtung (100) nach einem der Ansprüche 1 bis 17, umfassend die Schritte:
A. Positionieren eines vorbestimmten Sägezahns in einer Bearbeitungsposition,
B. Verlagern eines Schweißbrenners (16) aus einer Ruheposition in eine Schweißposition,
C. Stellitieren des vorbestimmten Sägezahns in der Bearbeitungsposition,
D. Zurückverlagern des Schweißbrenners (16) in die Ruheposition,
E. Verlagern einer Anlassvorrichtung (150) aus einer Ruheposition in eine Anlassposition,
F. Anlassen eines in die Bearbeitungsposition verlagerten, vorbestimmten Sägezahns,
G. Zurückverlagern der Anlasseinrichtung (150) in die Ruheposition.

19. Verfahren nach Anspruch 18,
wobei die Arbeitschritte A bis G derart ausgeführt werden, dass in einem ersten Arbeitsgang die Schritte A bis D ausgeführt werden, bis sämtliche Sägezähne eines Sägeblattes S stelltiert sind, und dass nach Abschluss dieses ersten Arbeitsgangs die Schritte D bis F in einem zweiten Arbeitsgang für sämtliche Sägezähne des Sägeblattes ausgeführt werden, wobei der Schritt G einen Bearbeitungszyklus abschließt.

## Claims

1. An apparatus (100) for the processing of saw teeth of a saw blade (S), comprising:
- a clamping device (102) for clamping and guiding of the saw blade (S) to be processed,
- a feeding device (104) for displacing a predetermined saw tooth of the saw blade (S) into a predetermined processing position,
- a stelliting device (10) which comprises a wire feeding device (12) and a welding torch (16), and comprising,
- a tempering device (150) for supplying heat to a saw tooth,
**characterised in that** for processing a predetermined saw tooth which was displaced into the predetermined processing position, the welding torch (16) of the stelliting device (10) is displaceable from a rest position (RSP) into a welding position (SP) and the tempering device (150) is displaceable from the rest position (RHP) into the tempering position (HP) and returned in an alternating manner.

2. The apparatus (100) according to Claim 1,
**characterised in that** the tempering device (150) is displaceable from the rest position into the tempering position (HP) point manually or by means of a controllable drive (158).

3. The apparatus (100) according to Claim 1 or 2,
**characterised in that** the tempering device (150) is disposed on a lever assembly (154) and is displaceable from the rest position (RHP) into the tempering position (HP).

4. The apparatus (100) according to Claim 3,
**characterised in that** the lever assembly (154) is disposed in a support (172) in such a manner that the tempering device (150) performs an at least approximately linear motion from the rest position (RHP) into the tempering position (HP) and back again.

5. The apparatus (100) according to Claim 3,
**characterised in that** the lever assembly (154) is disposed in such a manner that the tempering device (150) moves along a curved curve, in particular along a circularly curved curve, from the rest position (RHP) into the tempering position (HP) and back again.

6. The apparatus (100) according to Claim 1 or 2,
**characterised in that** the tempering device (150) is displaceable from the rest position (RHP) into the tempering position (HP) and back again by means of a slide assembly.

7. The apparatus (100) according to one of Claims 1 to 6,
**characterised in that** the feeding device (104) may be controlled in such a manner that the same saw tooth remains in the processing position for successive stelliting and tempering.

8. The apparatus (100) according to Claim 7,
**characterised in that** the feeding device (104) may be controlled in such a manner that for stelliting and tempering, a respective other saw tooth is displaceable into the processing position.

9. The apparatus (100) according to Claims 6 and 7,
**characterised in that** the feeding device (104) may be controlled by means of a CNC controller.

10. The apparatus (100) according to the previous claims,
**characterised in that** the welding torch (16) is displaceable by means of a positioning lever (166) or a positioning drive (168).

11. The apparatus (100) according to one of the previous claims,
**characterised in that** the tempering device (150) is configured as a high frequency tempering device which comprises a replaceable induction loop (152).

12. The apparatus (100) according to Claim 11,
**characterised in that** the induction loop (152) is displaceable relative to the saw tooth to be processed.

13. The apparatus (100) according to Claim 11 or 12,
**characterised in that** the induction loop (152) is displaceable in the vertical and horizontal directions relative to the saw tooth.

14. The apparatus (100) according to one of Claims 11 to 13,
**characterised in that** the induction loop (152) is displaceable transversely to the saw blade (S).

15. The apparatus (100) according to one of the previous claims,
**characterised in that** the induction loop (152) is displaceable via at least one adjusting screw (160, 162, 164) or via at least one eccentric assembly.

16. The apparatus (100) according to one of the previous claims,
**characterised in that** the stelliting device (10) comprises a straightening roll (22) and a welding wire feed sleeve (20).

17. The apparatus (100) according to Claim 16,
**characterised in that** the welding wire feed sleeve (20) feeds the welding wire (14) to a predetermined melt-off point (AP) at a moulding plate assembly (18).

18. A method for the processing of saw teeth of a saw blade (S) with an apparatus according to one of Claims 1 to 17, comprising the steps of:
A. Positioning of a predetermined saw tooth in a processing position,
B. displacing a welding torch (16) from a rest position into a welding position,
C. stelliting the predetermined saw tooth in the processing position,
D. returning the welding torch (16) into the rest position,
E. displacing a tempering device (150) from a rest position into a tempering position,
F. tempering a pretermined saw tooth which was displaced into the processing position,
G. returning the tempering device (150) into the rest position.

19. The method according to Claim 18,
wherein steps A to G are executed in such a manner that steps A to D are executed in a first operation sequence until all saw teeth of a saw blade have been stellited, and after this first operation sequence, steps D to F are executed for all saw teeth of the saw blade in a second operation sequence, wherein step G completes a processing cycle.

## Revendications

1. Dispositif (100) d'usinage des dents de scie d'une lame de scie (S) comprenant
- un dispositif de bridage (102) pour brider et guider la lame de scie (S) à usiner,
- un dispositif d'avance (104) pour déplacer une dent de scie prédéterminée de la lame de scie (S) dans une position d'usinage prédéterminée,
- un dispositif de stellitage (10) comprenant un dispositif d'amenée de fil (12) et un chalumeau de soudage (16), et
- un dispositif de revenu (150) pour amener de la chaleur à une dent de scie,
**caractérisé en ce que** pour usiner une dent de scie prédéterminée, déplacée dans la position d'usinage, alternativement le chalumeau de soudage (16) du dispositif de stellitage (10) est déplaçable d'une position de repos (RSP) dans une position de soudage (SP) et le dispositif de revenu (150) est déplaçable d'une position de repos (RHP) dans une position de revenu (HP), et inversement, le dispositif de revenu (150) amenant de la chaleur à la dent de scie prédéterminée, déplacée dans la position d'usinage.

2. Dispositif (100) selon la revendication 1,
**caractérisé en ce que** le dispositif de revenu (150) est déplaçable manuellement ou par un entraînement commandable (158) de la position de repos dans la position de revenu.

3. Dispositif (100) selon la revendication 1 ou 2,
**caractérisé en ce que** le dispositif de revenu (150) est disposé sur un système de leviers (154) et déplaçable au moyen du système de leviers (154) de la position de repos (RHP) dans la position de revenu (HP).

4. Dispositif (100) selon la revendication 3,
**caractérisé en ce que** le système de leviers (154) est disposé sur un dispositif de maintien (172) de façon que le dispositif de revenu (150) effectue un mouvement au moins approximativement rectiligne de la position de repos (RHP) dans la position de revenu (HP) et inversement.

5. Dispositif (100) selon la revendication 3,
**caractérisé en ce que** le système de leviers (154) est disposé de façon que le dispositif de revenu (150) effectue un mouvement le long d'une ligne courbe, en particulier le long d'une ligne à courbure circulaire, de la position de repos (RHP) dans la position de revenu (HP) et inversement.

6. Dispositif (100) selon la revendication 1 ou 2,
**caractérisé en ce que** le dispositif de revenu (150) est déplaçable de la position de repos (RHP) dans la position de revenu (HP) et inversement au moyen d'un système de chariot.

7. Dispositif (100) selon l'une des revendications 1 à 6,
**caractérisé en ce que** le dispositif d'avance (104) peut être commandé de façon que la même dent de scie reste dans la position d'usinage pour le stellitage et le revenu successifs.

8. Dispositif (100) selon la revendication 7,
**caractérisé en ce que** le dispositif d'avance (104) peut être commandé de façon qu'une autre dent de scie soit déplaçable dans la position d'usinage pour le stellitage et le revenu.

9. Dispositif (100) selon les revendications 6 et 7,
**caractérisé en ce que** le dispositif d'avance (104) peut être commandé au moyen d'une commande CNC.

10. Dispositif (100) selon l'une des revendications précédentes,
**caractérisé en ce que** le chalumeau de soudage (16) est déplaçable au moyen d'un levier de positionnement (166) ou d'un entraînement de positionnement (168).

11. Dispositif (100) selon l'une des revendications précédentes,
**caractérisé en ce que** le dispositif de revenu (150) est réalisé sous la forme d'un dispositif de revenu à haute fréquence qui présente une boucle d'induction (152) remplaçable.

12. Dispositif (100) selon la revendication 11,
**caractérisé en ce que** la boucle d'induction (152) est déplaçable par rapport à la dent de scie à usiner.

13. Dispositif (100) selon la revendication 11 ou 12,
**caractérisé en ce que** la boucle d'induction (152) est déplaçable en direction verticale et horizontale par rapport à la dent de scie.

14. Dispositif (100) selon l'une des revendications 11 à 13,
**caractérisé en ce que** la boucle d'induction (152) est déplaçable transversalement à la lame de scie (S).

15. Dispositif (100) selon l'une des revendications précédentes,
**caractérisé en ce que** la boucle d'induction (152) est déplaçable par au moins une vis de réglage (160, 162, 164) ou au moins un arrangement excentrique.

16. Dispositif (100) selon l'une des revendications précédentes,
**caractérisé en ce que** le dispositif de stellitage (10) présente un arrangement de rouleaux à dresser (22) et une douille d'amenée de fil de soudage (20).

17. Dispositif (100) selon la revendication 16,
**caractérisé en ce que** la douille d'amenée de fil de soudage (20) amène le fil de soudage (14) à un point de fusion (AP) prédéterminé au niveau d'un arrangement de mâchoires de moulage (18).

18. Procédé d'usinage de dents de scie d'une lame de scie (S) avec un dispositif (100) selon l'une des revendications 1 à 17, comprenant les étapes :
A. positionnement d'une dent de scie prédéterminée dans une position d'usinage,
B. déplacement d'un chalumeau de soudage (16) d'une position de repos dans une position de soudage,
C. stellitage de la dent de scie prédéterminée dans la position d'usinage,
D. retour du chalumeau de soudage (16) dans la position de repos,
E. déplacement d'un dispositif de revenu (150) d'une position de repos dans une position de revenu,
F. revenu d'une dent de scie prédéterminée déplacée dans la position d'usinage,
G. retour du dispositif de revenu (150) dans la position de repos.

19. Procédé selon la revendication 18,
selon lequel les étapes A à G sont exécutées de telle façon que, dans une première opération, les étapes A à D soient exécutées jusqu'à ce que toutes les dents de scie d'une lame de scie S soient stellitées, et qu'à l'issue de cette première opération les étapes D à F soient exécutées dans une deuxième opération pour toutes les dents de scie de la lame de scie, l'étape G terminant un cycle d'usinage.
